(19) Europäisches Patentamt
European Patent Office
Office européen des brevets

(11) EP 1 840 168 B1

(12) **EUROPEAN PATENT SPECIFICATION**

(45) Date of publication and mention of the grant of the patent:
**15.09.2010 Bulletin 2010/37**

(21) Application number: **06711708.5**

(22) Date of filing: **16.01.2006**

(51) Int Cl.:
***C08L 77/00*** *(2006.01)* ***C08K 13/04*** *(2006.01)*
***C08J 5/18*** *(2006.01)* ***C08K 7/24*** *(2006.01)*
***C08K 7/26*** *(2006.01)*

(86) International application number:
**PCT/JP2006/300427**

(87) International publication number:
**WO 2006/077787 (27.07.2006 Gazette 2006/30)**

(54) **CRYSTALLINE RESIN COMPOSITION AND CRYSTALLINE RESIN FILM**

KRISTALLINE HARZZUSAMMENSETZUNG UND KRISTALLINER HARZFILM

COMPOSITION DE RESINE CRISTALLINE ET PELLICULE DE RESINE CRISTALLINE

(84) Designated Contracting States:
**BE DE IT**

(30) Priority: **21.01.2005 JP 2005014769**

(43) Date of publication of application:
**03.10.2007 Bulletin 2007/40**

(73) Proprietor: **MITSUBISHI ENGINEERING-PLASTICS CORPORATION**
**Tokyo 105-0021 (JP)**

(72) Inventors:
- **OHYAMA, Hajime,**
**Mitsubishi Engineering-Plastics Co**
**Hiratsuka-shi, Kanagawa, 2540016 (JP)**
- **TSUNODA, Morio,**
**Mitsubishi Engineering-Plastics Co**
**Hiratsuka-shi, Kanagawa, 2540016 (JP)**
- **NAKAO, Tetsuya,**
**Mitsubishi Engineering-Plastics Co**
**Hiratsuka-shi, Kanagawa, 2540016 (JP)**

(74) Representative: **HOFFMANN EITLE**
**Patent- und Rechtsanwälte**
**Arabellastrasse 4**
**81925 München (DE)**

(56) References cited:

| | |
|---|---|
| **JP-A- 7 258 478** | **JP-A- 9 157 439** |
| **JP-A- 07 233 266** | **JP-A- 07 258 478** |
| **JP-A- 09 157 439** | **JP-A- 59 064 647** |
| **JP-A- 2000 309 702** | **JP-A- 2000 309 702** |
| **JP-A- 2002 080 714** | **JP-B2- 61 036 866** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 840 168 B1

## Description

### TECHNICAL FIELD

The present invention relates to a crystalline resin composition and a crystalline resin film, more particularly to a crystalline resin composition and a crystalline resin film having excellent gas barrier properties, transparency and slip characteristics.

### BACKGROUND ART

The polyamide films, a typical example of crystalline resin films, have been used for a wide scope of purposes, principally for food packaging, in the form of single-layer films, multi-layer films with other types of resin or laminate films with other materials, owing to their excellent gas barrier properties as well as mechanical and thermal properties. Transparency of polyamide films is an important characteristic of these films since it greatly affects the appearance of the contents, so generally the polyamide films with high transparency have been demanded. Poor slip characteristics of the film tends to give rise to troubles in use, such as hitching of the film during the bag making operation or shearing in multicolor printing. Slip characteristics of the films, therefore, is a very important specificity of the films in terms of their productivity, quality and commercial value. It is thus essential for this type of film to satisfy both requirements for transparency and slip characteristics, but these two factors are alien to each other as evidenced by the fact that the films with good transparency are smooth on the surface, while the films with a smooth surface are poor in slipperiness.

Many attempts have been made for improving slip characteristics of the polyamide films. For instance, a method has been proposed in which fine particles of an inorganic filler such as talc or silica are incorporated in the film (Patent Document 1).

Also, in order to satisfy both requirements for transparency and slip characteristics to the utmost, it has been proposed to use amorphous aluminosilicate (zeolite) which has been treated with a silane coupling agent on the surface (Patent Document 2). This proposal, owing to use of the surface-treated zeolite particles, can provide a polyamide film having better transparency and slip characteristics than obtainable when using the inorganic particles such as silica or talc, but the film provided by such a proposal is still unsatisfactory in transparency and slip characteristic, therefore, it has been required to improve further on such films.

Patent Document 1: Japanese Patent Publication (KOKOKU) No. 54-4741

Patent Document 2: Japanese Patent Application Laid-Open (KOKAI) No. H1-156333

JP 07 258478 A discloses a crystalline polyolefin system resin. The example 7 of D1 discloses a composition comprising a spherical porous filler with an average particle size of 3.9 μm and a polyhedral porous filler with an average particle size of 2,1 μm.

### DISCLOSURE OF THE INVENTION

### PROBLEM TO BE SOLVED BY THE INVENTION

The present invention has been made in view of the above circumstances, and an object thereof is to provide a crystalline resin composition and a crystalline resin film having excellent gas barrier properties, transparency and slip characteristics.

As the results of the present inventors' earnest studies on the subject matter, the following findings has been found. A cause of deterioration of transparency observed when it is tried to improve slip characteristics of the film by incorporating the fine particles of an inorganic filler is formation of voids, or the spaces created between the particles and the surrounding matrix resin in the step of stretching in the film forming operation. Such voids are less likely to form in the resins which are rather low in intermolecular force generated by hydrogen bonds like crystalline resin, inter alia polyester resins, because in these resins the internal stress generated by stretching is relatively low. However, in the resins with high intermolecular force by hydrogen bonds such as polyamide resins, the internal stress generated on stretching is high, making it more likely to form the spaces, or voids, between the particles and the matrix resin. Further, in the films having gas barrier properties (low oxygen permeability) like polyamide resin-made films, the formed voids serve as the passages of gas to deteriorate the gas barrier properties (enhance oxygen permeability).

As a result of further studies based on the above findings, the present inventors have found that in the attempt for improving film slip characteristics by forming a macro-rough surface and a micro-rough surface on the film by using two types of particles differing in size, it is possible to obtain a resin composition for the crystalline resin films that can

satisfy both requirements for transparency and slip characteristics while maintaining gas barrier properties, by using the spherical particles as the large-sized particles contributing to the macro-rough surface and the polyhedral particles as the small-sized particles contributing to the micro-rough surface.

MEANS FOR SOLVING THE PROBLEM

The present invention has been completed on the basis of the above findings, and in the first aspect of the invention, there is provided a crystalline resin composition comprising 100 parts by weight of a crystalline resin (A) and 0.01 to 0.5 parts by weight of a porous filler (B), said porous filler (B) comprising a spherical porous filler (B-1) having an average particle size of 1.5 to 6 μm and a polyhedral porous filler (B-2) having an average particle size of 0.4 to 1.5 μm, with the (B-1) to (B-2) ratio be weight falling in the range of 1/90≤(B-1)/(B-2)≤1/1.

In the second aspect of the present invention, there is provided a crystalline resin film obtained by molding the said crystalline resin composition. In the third aspect of the present invention, there is provided a crystalline resin film having such properties that its oxygen permeability at 23°C and 65% RH with a film thickness of 15 μm is not more than 50 ml/[$m^2$·day·atm], its haze is not more than 2.5%, and the coefficient of static friction between the films is not more than 0.5 at 23°C and 65% RH and not more than 0.6 at 23°C and 90% RH.

EFFECT OF THE INVENTION

According to the present invention, there are provided a crystalline resin composition and a crystalline resin film excelling in gas barrier properties, transparency and slip characteristics. The crystalline resin film of the present invention is also suited for secondary working such as printing, bag making and laminating, and can be applied to a wide variety of uses, particularly for food packaging.

BEST MODE FOR CARRYING OUT THE INVENTION

A detailed description of the present invention is given below. Generally, polyolefins (such as polyethylene and polypropylene), polyamides and polyesters are cited as typical examples of the crystalline resins, but in the present invention, the resins with a greater intermolecular force than polyolefin resins or polyester resins are preferred, with polyamide resins being especially preferred.

As examples of the polyamide resins usable in the present invention, lactams with 3- or more-membered rings, polymerizable ω-aminoacids, and polyamide resins obtainable from polycondensation of dibasic acids and diamines can be cited. More specifically, they include polycondensates such as ε-caprolactam, aminocaproic acid, enantholactam, 7-aminoheptanoic acid, 11-aminoundecanoic acid, 9-aminononanoic acid, α-pyrrolidone, and α-piperidone; polymers obtainable from polycondensation of diamines such as hexamethylenediamine, nonamethylenediamine, undecamethylenediamine, dodecamethylenediamine, methaxylenediamine, and dicarboxylic acids such as terephthalic acid, isophthalic acid, adipic acid, sebacic acid, dodecanoic dibasic acid, glutaric acid, and copolymers thereof. For example, polyamides 4, 6, 7, 8, 11, 12, 6·6, 6·10, 6·11, 6·12, 6T, 6/6·6, 6/12, 6/6T and 6I/6T can be referred to. These polyamides may be used either singly or as a mixture of two or more. Of these polyamides, polyamide 6 and polyamide 6/66 copolymer are especially preferred in view of thermal and mechanical properties of the produced film.

The viscosity number of these polyamide resins, as determined in 96 wt% sulfuric acid at a concentration of 1 wt% and 23°C according to JIS-K-6933-99, is usually 115 to 300, preferably 120 to 250. If the viscosity number of the polyamide resin used is below the above-defined range, the obtained film may prove unsatisfactory in mechanical properties, and if this viscosity number exceeds the above-defined range, the film forming operation may become difficult to carry out.

Exemplary of the porous fillers usable in the present invention are porous silica, calcium carbonate, zeolite and silica gel. Zeolite is particularly preferred as the effect of the present invention is maximized by using the primary particles substantially uniform in shape and size as the porous filler. The pore volume of these porous fillers, measured as DBP oil absorption, is usually not less than 10 ml/100 g, preferably not less than 30 ml/100 g, and its upper limit is usually 100 ml/100 g, preferably 80 ml/100 g, more preferably 60 ml/100 g. The specific surface area of the porous fillers is usually not less than 10 $m^2$/g, preferably not less than 30 $m^2$/g, with its upper limit being usually 100 $m^2$/g, preferably 50 $m^2$/g, more preferably 40 $m^2$/g.

Zeolite used in the present invention may be either amorphous or crystalline in its structural form, but amorphous zeolite as determined by X-ray analysis is preferred. Use of zeolite having a crystal structure as confirmed by X-ray analysis may lead to a reduced stretch stability and tends to cause frequent stretch break. The composition of amorphous zeolite is represented by the formula $xMO \cdot Al_2O3 \cdot ySiO_2 \cdot zH_2O$ wherein M is an alkaline metal or an alkaline earth metal, x is a number of 0.01 to 2, y is a number of 1 to 100, and z is a number of 0.1 to 5.

In the present invention, two types of porous filler differing in particle size and shape from each other are used.

One type of filler is spherical and the other type is polyhedral.

The spherical porous filler used in the present invention is preferably as close to perfect sphere as possible in particle shape. The degree of sphericity of the spherical filler can be represented by the spherical ratio defined by the following equation (1). The spherical ratio of the filler used in the present invention is usually 0.90 to 1.0, preferably 0.93 to 1.0. If the ratio is less than 0.90, the obtained film may prove unsatisfactory in slip characteristics.

Spherical ratio = projected area of particle/ circle-equivalent area of greatest diameter in particle projected plane (1)

The polyhedral porous filler used in the present invention is significant in that it is of a configuration having corners or edges. The polyhedron needn't be a regular polyhedron such as regular tetrahedron, regular hexahedron, regular octahedron, regular dodecahedron and regular icosahedron; it may be a quasi-regular polyhedron, which includes various types of "corner-less polyhedron", "stellate regular polyhedron" and "prism". The number of the facets of these polyhedrons is not specifically defined, but it is usually 4 to 20, preferably 4 to 8. The configuration of the polyhedrons can be confirmed by microphotographs. In the present invention, a porous filler of which not less than 90% is constituted by hexahedral particles is particularly preferred.

The above-mentioned zeolite can be obtained, for example, by using sodium silicate, silica sol or acid clay as base material, synthesizing crystalline zeolite therefrom, and subjecting it to an acid treatment.

The synthesis of crystalline zeolite can be accomplished by a known method which comprises subjecting the said base material to an acid treatment, adding an alkali aluminate to the resulting silicic acid solution such as active silicic acid sol, and heating it. The acid treatment of crystalline zeolite comprises adding an acid in an amount 0.2 to 5 times by mole the basic content (sodium) of zeolite contained in the base material, effecting sufficient contact thereof, then carrying out filtration, washing with water, drying and calcining at 300 to 600°C, and if necessary further conducting crushing and classification. The acid used for the acid treatment may be either an inorganic acid or an organic acid, but a mineral acid such as hydrochloric acid, sulfuric acid or nitric acid is preferably used for the economical reason.

As for the type of zeolite to be used in the present invention, it is preferable to use zeolite A, zeolite X, zeolite Y, zeolite P in view of ease of synthesis and treatment, with zeolite A being especially preferred in terms of economy. The particle size and shape of the crystalline zeolite to be produced can be varied over a wide range by selecting the said synthesizing conditions. In the said acid treatment of crystalline zeolite, care should be taken so as not to cause collapse of the shape, such as cubic or spherical, of the amorphous aluminosilicate (zeolite).

In the present invention, it is possible to use commercial products of zeolite, for instance, "SILTON® AMT", a cubic zeolite available from Mizusawa Chemical Co., and "SILTON® JC", a spherical zeolite also available from the above company.

The cubic zeolite and the spherical zeolite are different not only in shape but also in composition. For instance, the composition of "SILTON® AMT" (cubic zeolite) is $H_2O/Al_2O_3/SiO_2/Na_2O/CaO$ = 4.64/41.56/47.55/6.25/0, while the composition of "SILTON® JC" is $H_2O/Al_2O_3/SiO_2/Na_2O/CaO$ = 4.31/25.91/54.56/8.48/6.74. Thus, the above-mentioned two types of zeolite differ in compositional ratio of $Al_2O_3$ and $SiO_2$ and in content of CaO.

Oil absorption of zeolite, as measured by the method of JIS K-5101, is preferably 1 to 70 ml/100 g. A too low oil absorption leads to a reduced stretch stability of the film while a too high oil absorption diminishes the effect of improving slip characteristics in stretching. The preferred range of oil absorption is 5 to 70 ml/100 g.

In the crystalline resin composition of the present invention, the content of porous filler (B) is 0.01 to 0.5 parts by weight based on 100 parts by weight of crystalline resin (A). When the content of filler (B) is less than 0.01 part by weight, the slip characteristics improving effect may be lessened and when the filler content exceeds 0.5 parts by weight, the composition tends to lower in transparency. Thus, the content of porous filler (B) is preferably 0.015 to 0.4 parts by weight, more preferably 0.02 to 0.3 parts by weight.

In the present invention, two types of particles differing in size are used to form a macro-rough surface and a micro-rough surface so as to improve slip characteristics of the film. In forming such different rough surfaces, spherical particles are used as large-sized particles serving for forming the macro-rough surface while polyhedral particles are used as small-sized particles which contribute to forming the micro-rough surface. Thus, in the present invention, there are used spherical porous filler (B-1) having an average particle size (diameter) of 1.5 to 6 $\mu$m and polyhedral porous filler (B-2) having an average particle size of 0.4 to 1.5 $\mu$m, with the (B-1)/(B-2) ratio by weight being adjusted to stay within the range of $1/90 \leq (B\text{-}1)/(B\text{-}2) \leq 1/1$.

If the average particle size of the spherical porous filler (B-1) exceeds 6 $\mu$m, the produced film may prove

unsatisfactory in transparency, and if the average particle size is less than 1.5 μm, the intended slip characteristics improving effect may not be obtained. Also, if the average particle size of the polyhedral porous filler (B-2) exceeds 1.5 μm, film transparency may be unsatisfactory, and if its average particle size is less than 0.4 μm, the desired slip characteristics improving effect may not be provided. It is to be also noted that if the (B-1)/(B-2) ratio by weight is more than 1/1, film transparency lowers, and if this weight ratio is less than 1/90, slip characteristics may not be improved. Thus, the weight ratio of spherical porous filler (B-1) to polyhedral porous filler (B-2) is preferably in the range of 1/80≤ (B-1)/(B-2)≤9/10, more preferably 1/70≤(B-1)/(B-2)≤8/10.

The present invention is particularly significant in that the spherical particles having no corners are used as the large-sized particles while the polyhedral particles having corners are used as the small-sized particles so as to minimize the chance of forming spaces between the particles and the surrounding matrix resin in the stretching step in the film forming operation to thereby suppress formation of voids to the utmost. This has been conducive to the obtainment, according to the present invention, of a resin composition for a crystalline resin film which can satisfy both requirements for transparency and slip characteristics while maintaining gas barrier properties.

The particle size (diameter) of the porous filler can be determined with ease by a Coulter Counter method. According to this method, by using a particle counter mfd. by Coulter Electronics, the particles are dispersed in an electroconductive liquid such as an electrolyte solution to prepare a suspension, and the distribution of diameter of the particles is determined from the change of voltage and the number of times of change when the suspension is passed through the approximately 100 μm pores applied with a voltage. The average particle size of the polyhedral porous filler (B-2) is expressed by the value of average particle size determined by the Coulter counter method.

The shape and size of the said porous fillers can be easily judged through observation by SEM of X5,000 to X10,000 magnification. The said porous fillers won't change in shape and size even when calcined at 600 to 800°C, so that even in the case of a film molded from the crystalline resin composition of the present invention, the shape and size of the porous fillers can be determined with ease by dry ashing the film at 600 to 800°C and observing the ash by SEM.

A silane coupling agent (C) is preferably incorporated in the crystalline resin composition of the present invention. As the silane coupling agent (C), for instance those having organosiloxane groups can be used. Examples of the organo groups include alkyl groups such as methyl, ethyl and propyl; alkenyl groups such as vinyl and allyl; cycloalkyl groups such as cyclopropyl and cyclohexyl; aryl or aralkyl groups such as phenyl and benzyl; aminoalkyl groups such as γ-aminopropyl and N-(β-aminoethyl)-γ-aminopropyl; and those containing functional groups such as chloro, thiol and epoxy, for instance, γ-glycidoxy, γ-chloropropyl and γ-mercaptopropyl.

Examples of the silane coupling agents (C) usable in the present invention include trimethylmethoxysilane, vinyltriethoxysilane, γ-chloropropyltrimethoxysilane, γ-aminopropyltriethoxysilane, N-(β-aminoethyl)-γ-aminopropyltrimethoxysilane, γ-mercaptopropyltrimethoxysilane, γ-glycidoxypropyltrimethoxysilane, γ-methacryloxypropyltrimethoxysilane, hexamethyldisilazane, N,N'-bis(trimethylsilyl)urea, N,N'-bis(trimethylsilyl)acetamide, diethyltrimethylsilylamine, N,N'-bis(trimethylsilyl)trifluoroacetamide, and stearyltrimethoxysilane. Aminosilanes such as γ-aminopropyltriethoxysilane are particularly preferred for use in the present invention.

Such a silane coupling agent (C) is incorporated in an amount of usually 0.01 to 60% by weight, preferably 0.05 to 40% by weight, more preferably 0.1 to 30% by weight based on the porous filler (B). If the amount of the silane coupling agent (C) is less than 0.01% by weight, its film clouding preventive effect is scarcely observed, and if its amount exceeds 60% by weight, cohesion of the coupling agent particles tends to take place and these particles are liable to remain as fish eyes in the film.

For producing the crystalline resin composition of the present invention, a porous filler and a silane coupling agent are incorporated in a crystalline resin in an appropriate way, and the method thereof is not limited. For instance, a porous filler and a silane coupling agent may be added at any stage in the process from preparation of the crystalline resin till formation of the film, or a porous filler which has been treated with a silane coupling agent in advance may be added in the resin. In case where the crystalline resin is a polyamide resin, the following methods may be used.

(a) A silane coupling agent diluted with water is added to a porous filler and mixed by stirring under heating to prepare a porous filler treated with a silane coupling agent, and this preparation is incorporated in the base resin at any stage in the polyamide resin production process from the early phase (normal pressure) of polymerization reaction till start of the reduced-pressure polymerization reaction.

(b) The said porous filler treated with a silane coupling agent is dry blended with a polyamide resin, and if necessary the blend is melt kneaded.

(c) A porous filler and a silane coupling agent are dry blended with a polyamide resin, and if necessary the blend is melt kneaded.

(d) A masterbatch containing a porous filler and a silane coupling agent in high concentrations is prepared by the above method (b) or (c), and this masterbatch is mixed with a polyamide resin.

The method (a) or (d) is preferred in view of good dispersion of zeolite.

In the crystalline resin composition of the present invention, particularly when it is a polyamide resin composition, it is effective to blend a bisamide compound (D) for the purpose of improving slip characteristics and transparency in the water-cooled film forming process. As the bisamide compound (D), the compounds represented by the following formulae [I] and [II] can be used.

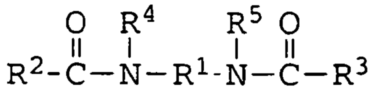

[I]

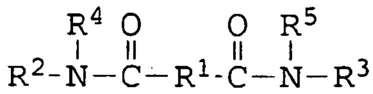

[II]

wherein $R^1$ is a divalent hydrocarbon residue; $R^2$ and $R^3$ are each a monovalent hydrocarbon residue; and $R^4$ and $R^5$ are each a hydrogen atom or a monovalent hydrocarbon residue.

Examples of the bisamide compounds represented by the above formula [I] are alkylenebis fatty acid amides, arylenbis fatty acid amides which can be obtained from reactions of various types of diamines and fatty acids. Examples of the said diamines include alkylenediamines such as ethylenediamine, propylenediamine, butylenediamine, hexamethylenediamine, octamethylenediamine and dodecamethylenediamine, arylenediamines such as phenylenediamine and naphthalenediamine, and arylenealkyldiamines such as xylylenediamine. Examples of the said fatty acids include stearic acid, hexanoic acid, octanoic acid, decanoic acid, lauric acid, myristic acid, palmitic acid, arachidic acid, behenic acid, oleic acid, elaidic acid and montanic acid. Representative of these bisamide compounds are N,N'-methylenebisstearic acid amide and N,N'-ethylenebisstearic acid amide.

The bisamide compounds represented by the formula [II] include the bisamides that can be obtained from reactions of various kinds of monoamines and dicarboxylic acids. Examples of the said monoamines include alkylamines such as ethylamine, methylamine, butylamine, hexylamine, decylamine, pentadecylamine, octadecylamine and dodecylamine, arylamines such as aniline and naphthylamine, aralkylamines such as benzylamine, and cycloalkylamines such as cyclohexylamine. Examples of the said dicarboxylic acids include terephthalic acid, p-phenylenedipropionic acid, succinic acid and adipic acid. Representative of these bisamide compounds are dioctadecyl dibasic acid amides such as N,N'-dioctadecylterephthalic acid amide. These bisamide compounds can be used singly or as a combination of two or more.

The amount of the bisamide compound (D) incorporated is usually 0.01 to 1 part by weight, preferably 0.02 to 0.5 part by weight, based on 100 parts by weight of the polyamide resin. If the amount of this compound (D) is too small, it can not produce the desired slip characteristics improving effect, while a too much amount of this compound leads to deterioration of printability of the produced film or a reduction of adhesiveness in the laminating operation. The said bisamide compounds can be used either singly or as a combination of two or more.

The method for incorporation of bisamide compound is not designated in the present invention; it is possible to use, for example, a so-called external addition method in which a bisamide compound is dry blended with the pellets of a polyamide resin, a kneading method which comprises melt mixing a bisamide compound with the pellets, a so-called masterbatch method which comprises blending a material containing the resin in a high concentration, and an internal addition method in which a bisamide compound is added in the course of polymerization.

The crystalline resin composition according to the present invention may contain, in addition to the said components (A) to (D), various additives known in the art within limits not prejudicial to the effect of the present invention. Such additives include, for instance, antioxidants such as hindered phenols, phosphoric esters and phosphorous esters, weathering agents such as triazine-based compounds, colorants such as pigments and dyes, antistatic agents, lubricants, and surfactants. The method of incorporating these additives is not specifically defined in the present invention, but it is possible to use any suitable method known in the art.

The crystalline resin film of the present invention can be obtained by molding the said crystalline resin composition of the present invention using the known film forming techniques. The typical film forming techniques usable in the present invention include a T-die method in which a film-shaped material extruded from a T-die is cast onto a chilled roll for cooling and solidifying the extrudate, and an inflation method in which the material is extruded from a ring die, then air is blown into the tubular extrudate to expand it, and cooling it with air or water. The thus molded film is put to use either as a non-stretched (non-oriented) film or as a stretched (oriented) film after monoaxially or biaxially stretched.

The crystalline resin film according to the present invention is **characterized in that** its oxygen permeability at 23°C and 65% RH when the film thickness is 15 μm is not more than 50 ml/[$m^2$·day·atm], that its haze is not more than 2.5%, and that the coefficient of static friction between the films is not more than 0.5 at 23°C and 65% RH and not more than 0.6 at 23°C and 90% RH. In the film of the present invention, its oxygen permeability is preferably not more than 40 ml/[$m^2$·day·atm], its haze is preferably not more than 2.2%, and the coefficient of static friction between the films is preferably not more than 0.4 at 23°C and 65% RH and not more than 0.58 at 23°C and 90% RH. These property values were determined by the methods shown in the Examples given below.

The crystalline resin film of the present invention may be either a single-layer film or a multi-layer or laminated film formed by coextrusion with other types of resin. The crystalline resin film according to the present invention excels in gas barrier properties, transparency and slip characteristics, is easy to perform secondary working such as bag making, printing and laminating, and finds a wide scope of application as a packaging film, particularly for food packaging.

Also, the film of the present invention is usually less than 0.2 mm in thickness. The lower limit of its thickness is usually set at 1 μm in view of difficulties in the film forming operation.

## EXAMPLES

The methods of measurements used in the following Examples and Comparative Examples are as described below. The materials incorporated in the resin are as specified in Table 1 given below.

(1) Gas barrier properties (oxygen permeability)

Oxygen permeability (ml/[$m^2$·day·atom]) was measured according to ASTM D-3985 using "OXY-TRAN 100" of Modern Control Co., Ltd. in an ambience of 23°C and 65% RH.

(2) Haze

Haze was measured using a hazeometer mfd. by Tokyo Denshoku Co., Ltd.

(3) Coefficient of static friction between films

Coefficient of static friction (μS) was measured with a translation operation system under the conditions of 23°C and 65% and 90% RH.

(4) Spherical ratio

Observing the spherical porous particles by X5,000 to X10,000 magnification SEM, the projected areas of 500 particles and the circular-equivalent area of the greatest diameter in the projected plane were determined from the microphotographed images, and the spherical ratio was calculated from the afore-shown equation (1).

(5) DBP oil absorption

This was measured according to JIS 6220.

Table 1

| | | |
|---|---|---|
| (B-1a) | Spherical zeolite (SILTON® JC20, MIZUSAWA INDUSTRIAL CHEMICALS, LTD.) | Av. particle size: 2.1 μm Spherical ratio: 0.98 DBP oil absorption: 50 ml/100 g Specific surface area: 20 $m^2$/g |
| (B-1b) | Spherical zeolite (SILTON® JC70, MIZUSAWA INDUSTRIAL CHEMICALS, LTD.) | Av. particle size: 6.8 μm Spherical ratio: 0.98 DBP oil absorption: 40 ml/100g Specific surface area: 30 $m^2$/g |
| (B-1c) | Bulk silica (Sylysia 740, Fuji Sylysia Chemical Ltd.) | Av. particle size: 3.5 μm Spherical ratio: 0.7 DBP oil absorption: 95 ml/100 g Specific surface area: 700 $m^2$/g |
| (B-2a) | Cubic (regular hexahedral) zeolite (SILTON® AMT08, Mizusawa Chemical) | Av. particle size: 0.85 μm Ratio of regular hexahedrons: 100% DBP oil absorption: 60 ml/100 g Specific surface area: 35 $m^2$/g |

(continued)

| | | |
|---|---|---|
| (B-2b) | Cubic (regular hexahedral) zeolite (SILTON® AMT25, Mizusawa Chemical) | Av. particle size: 2.5 μm Ratio of regular hexahedrons: 100% DBP oil absorption: 40 ml/100 g Specific surface area: $10m^2/g$ |
| (C) | Silane coupling agent (A1100, Nihonunica Corporation) | γ-aminopropyltriethoxy silane |
| | Bisamide compound | |
| (D) | (Kaowax EB, Kao Corporation) | Ethylenebisstearic acid amide |

Examples 1-2 and Comparative Examples 1-8:

Zeolite of the four types specified above, a prescribed amount of silane coupling agent and water 6 times by weight the combined amount of zeolite and silane coupling agent were mixed while heating at 80°C in a supermixer to carry out zeolite treatment while evaporating water. Then the product was dried at 120°C to obtain four types of surface-treated fine zeolite particles.

The obtained surface-treated fine zeolite particles were added in the course of polymerization of caprolactam so that they would have the parts by weight shown in Table 2 or 3 to 100 parts by weight of the finally obtained polyamide 6 resin, and polymerized in the usual way to obtain polyamide 6 resin having a viscosity number of 180. The thus obtained polyamide 6 resin incorporated with the zeolite particles was treated in boiling water by a conventional method to extract away the low-molecular weight matter, and then dried by a vacuum dryer.

The bisamide compound was added to have the parts by weight shown in Table 2 or 3 to 100 parts by weight of the polyamide resin, and the mixture was worked into a 135 μm thick raw film using a T-die type film forming machine with an extruder diameter of 40 mm at a resin temperature of 265°C and a cooling roll temperature of 30°C. This raw film was biaxially stretched 3 times in both machine and transverse directions simultaneously at 80°C and then heat set at 200°C to obtain a 15 μm thick biaxially stretched film. The results of evaluation of the obtained stretched films are shown in Tables 2 and 3.

Table 2

| | Example | | Comp. Example | | |
|---|---|---|---|---|---|
| | 1 | 2 | 1 | 2 | 3 |
| Composition | | | | | |
| (B-1a) | 0.02 | 0.035 | - | - | - |
| (B-1b) | - | - | - | - | 0.02 |
| (B-1c) | - | - | - | - | - |
| (B-2a) | 0.05 | 0.035 | - | 0.07 | 0.05 |
| (B-2b) | - | - | 0.075 | - | - |
| (C) | 0.01 | 0.01 | 0.01 | 0.01 | 0.01 |
| (D) | 0.08 | 0.08 | 0.08 | 0.08 | 0.08 |
| Film evaluation | | | | | |
| Oxygen permeability (ml/[$m^2$·atm·day]) | 30 | 32 | 35 | 33 | 78 |
| Haze | 1.9 | 2.1 | 2.0 | 1.9 | 3.3 |
| $\mu_s$65(%RH) | 0.35 | 0.38 | 0.49 | 0.34 | 0.39 |
| $\mu_s$90(%RH) | 0.48 | 0.55 | 0.65 | 0.67 | 0.48 |
| (Composition is shown by parts by weight to 100 parts by weight of the polyamide resin.) | | | | | |

Table 3

| | Comp. Example | | | | |
|---|---|---|---|---|---|
| | 4 | 5 | 6 | 7 | 8 |
| Composition | | | | | |
| (B-1a) | 0.02 | - | - | 0.001 | - |
| (B-1b) | - | - | 0.075 | - | - |
| (B-1c) | - | - | - | - | 0.35 |
| (B-2a) | - | | - | - | 0.35 |
| (B-2b) | 0.05 | - | - | 0.03 | - |
| (C) | 0.01 | 0.01 | 0.01 | 0.01 | 0.01 |
| (D) | 0.08 | 0.08 | 0.08 | 0.08 | 0.08 |
| Film evaluation | | | | | |
| Oxygen permeability (ml/[$m^2$·atm·day]) | 84 | 42 | 54 | 36 | 85 |
| Haze | 3.4 | 2.2 | 2.6 | 2.1 | 3.2 |
| $\mu_s$65(%RH) | 0.38 | 0.40 | 0.41 | 0.55 | 0.62 |
| $\mu_s$90(%RH) | 0.50 | 0.61 | 0.62 | 0.84 | 0.90 |
| (Composition is shown by parts by weight to 100 parts by weight of the polyamide resin.) | | | | | |

The following facts are evident from Tables 2 and 3. The films produced from the compositions of Examples 1 and 2 containing two types of zeolite differing in shape and particle size in a combination specified in the present invention excel in gas barrier properties, transparency and slip characteristics. In contrast, the films obtained from the compositions of Comparative Examples 1, 2 and 6 containing only one type of zeolite are poor in slip characteristics and/or transparency. Also, the films obtained from the compositions of Comparative Examples 3, 4 and 7, where the combination of the two types of zeolite was outside the prescription of the present invention, were unsatisfactory in transparency and/or slip characteristics. Further, the film obtained from the composition of Comparative Example 8 using bulk silica (amorphous porous filler) instead of the spherical porous filler was poor in gas barrier properties, transparency and slip characteristics.

## Claims

**1.** A crystalline resin composition comprising 100 parts by weight of a crystalline resin (A) and 0.01 to 0.5 parts by weight of a porous filler (B), said porous filler (B) comprising a spherical porous filler (B-1) having an average particle size of 1.5 to 6 μm and a polyhedral porous filler (B-2) having an average particle size of 0.4 to 1.5 μm, with their weight ratio falling in the range of 1/90≤(B-1)/(B-2)≤ 1/1.

**2.** A crystalline resin composition according to Claim 1, wherein the crystalline resin is a polyamide resin.

**3.** A crystalline resin composition according to Claim 1 or 2, wherein the porous filler is zeolite.

**4.** A crystalline resin composition according to any one of Claims 1 to 3 further comprising a silane coupling agent (C) in an amount of 0.01 to 60% by weight based on the porous filler (B).

**5.** A crystalline resin composition according to Claim 4, wherein the silane coupling agent (C) is an aminosilane coupling agent.

**6.** A crystalline resin composition according to any one of Claims 1 to 5 further comprising a bisamide compound (D) in an amount of 0.01 to 1 part by weight based on 100 parts by weight of the crystalline resin (A).

**7.** A crystalline resin film molded from a crystalline resin composition as defined in any one of Claims 1 to 6.

**8.** A crystalline resin film according to Claim 7 which is an oriented film.

**9.** A crystalline resin film according to Claim 7 or Claim 8 having:

(i) an oxygen permeability measured according to ASTM D-3985 at 23°C and 65% RH with the film thickness being 15 μm of not more than 50 ml/[$m^2$·day·atm];
(ii) a haze of not more than 2.5%, and
(iii) a coefficient of static friction between the films of not more than 0.5 at 23°C and 65% RH and not more than 0.6 at 23°C and 90% RH.

## Patentansprüche

**1.** Kristalline Harzzusammensetzung, umfassend 100 Gew.-Teile eines kristallinen Harzes (A) und 0,01 bis 0,5 Gew.-Teile eines porösen Füllstoffs (B), wobei der poröse Füllstoff (B) einen kugelförmigen porösen Füllstoff (B-1) mit einer durchschnittlichen Partikelgröße von 1,5 bis 6 μm und einen polyedrischen porösen Füllstoff (B-2) mit einer durchschnittlichen Partikelgröße von 0,4 bis 1,5 μm umfasst, wobei ihr Gewichtsverhältnis in einen Bereich von $1/90 \leq (B\text{-}1)/(B\text{-}2) \leq 1/1$ fällt.

**2.** Kristalline Harzzusammensetzung gemäß Anspruch 1, worin das kristalline Harz ein Polyamidharz ist.

**3.** Kristalline Harzzusammensetzung gemäß Anspruch 1 oder 2, worin der poröse Füllstoff Zeolith ist.

**4.** Kristalline Harzzusammensetzung gemäß mindestens einem der Ansprüche 1 bis 3, die ferner ein Silan-Kupplungsmittel (C) in einer Menge von 0,01 bis 60 Gew.%, bezogen auf den porösen Füllstoff (B), umfasst.

**5.** Kristalline Harzzusammensetzung gemäß Anspruch 4, worin das Silan-Kupplungsmittel (C) ein Aminosilan-Kupplungsmittel ist.

**6.** Kristalline Harzzusammensetzung gemäß mindestens einem der Ansprüche 1 bis 5, die ferner eine Bisamidverbindung (D) in einer Menge von 0,01 bis 1 Gew.-Teile, bezogen auf 100 Gew.-Teile des kristallinen Harzes (A), umfasst.

**7.** Kristalline Harzfolie, die aus einer wie in einem der Ansprüche 1 bis 6 definierten kristallinen Harzzusammensetzung geformt wird.

**8.** Kristalline Harzfolie gemäß Anspruch 7, die eine orientierte Folie ist.

**9.** Kristalline Harzfolie gemäß Anspruch 7 oder 8, die folgendes aufweist:

(i) eine Sauerstoffdurchlässigkeit, gemessen gemäß ASTM D-3985 bei 23°C und 65 % RH mit einer Foliendicke von 15 μm, von nicht mehr als 50 ml/[$m^2$·Tag·atm];
(ii) eine Trübung von nicht mehr als 2,5 % und
(iii) einen Haftreibungskoeffizienten zwischen den Folien von nicht mehr als 0,5 bei 23°C und 65 % RH und nicht mehr als 0,6 bei 23°C und 90 % RH.

## Revendications

**1.** Composition de résine cristalline comprenant 100 parties en poids d'une résine cristalline (A) et 0,01 à 0,5 partie en poids d'une charge poreuse (B), ladite charge poreuse (B) comprenant une charge poreuse sphérique (B-1) ayant une taille moyenne de particule de 1,5 à 6 μm et une charge poreuse polyédrique (B-2) ayant une taille moyenne de particule de 0,4 à 1,5 μm, leur rapport pondéral se situant dans la plage de $1/90 \leq (B\text{-}1)/(B\text{-}2) \leq 1/1$.

**2.** Composition de résine cristalline selon la revendication 1, ladite résine cristalline étant une résine polyamide.

**3.** Composition de résine cristalline selon la revendication 1 ou 2, dans laquelle la charge poreuse est une zéolithe.

**4.** Composition de résine cristalline selon l'une quelconque des revendications 1 à 3, comprenant en outre un agent de couplage de type silane (C) en une quantité de 0,01 à 60 % en poids sur base de la charge poreuse (B).

**5.** Composition de résine cristalline selon la revendication 4, dans laquelle l'agent de couplage de type silane (C) est un agent de couplage aminosilane.

**6.** Composition de résine cristalline selon l'une quelconque des revendications 1 à 5 comprenant en outre un composé bisamide (D) en une quantité de 0,01 à 1 partie en poids sur base de 100 parties en poids de la résine cristalline (A).

**7.** Pellicule de résine cristalline moulée à partir d'une composition de résine cristalline telle que définie dans l'une quelconque des revendications 1 à 6.

**8.** Pellicule de résine cristalline selon la revendication 7 qui est une pellicule étirée.

**9.** Pellicule de résine cristalline selon la revendication 7 ou la revendication 8 ayant:

(i) une perméabilité à l'oxygène mesurée selon l'ASTM D-3985 à 23 °C et 65 % de HR (Humidité Relative), l'épaisseur de la pellicule étant de 15 μm, non supérieure à 50 ml / [$m^2$.jour.atm];
(ii) un voile non supérieur à 2,5 %, et
(iii) un coefficient de frottement statique entre les pellicules non supérieur à 0,5 à 23 °C et 65 % de HR et non supérieur à 0,6 à 23 °C et 90 % de HR.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 54004741 A
- JP H1156333 B
- JP 7258478 A